## Europäisches Patentamt
## European Patent Office
## Office européen des brevets

(19)

(11) Publication number: **0 262 917**
**A2**

(12)

# EUROPEAN PATENT APPLICATION

(21) Application number: **87308606.0**

(22) Date of filing: **29.09.87**

(51) Int. Cl.⁴: **B 29 B 7/18**

(30) Priority: **01.10.86 GB 8623601**

(43) Date of publication of application:
**06.04.88 Bulletin 88/14**

(84) Designated Contracting States: **DE ES FR GB IT**

(71) Applicant: **Farrel Bridge Limited**
**Queensway Castleton P.O. Box 27**
**Rochdale Lancashire, OL11 2PF (GB)**

(72) Inventor: **Ellwood, Henry**
**7 Leander Drive**
**Rochdale Lancashire (GB)**

**Hindle, Neil**
**40 Oulder Hill Drive**
**Rochdale Lancashire (GB)**

(74) Representative: **Downey, William Gerrard et al**
**WILSON GUNN & ELLIS 41-51 Royal Exchange Cross**
**Street**
**Manchester M2 7BD (GB)**

(54) **Mixers.**

(57) A Banbury Mixer is arranged with Rotors 18, 20 of conventional RH and LH Helix but of increased diameter. The overlapping loci of rotation of the tips of these larger rotors is such that the discharge door forms a sharp cusp 61 ensuring that when mixing stocks of low elasticity and green strength all the material in the chamber is mixed.

Fig.1

EP 0 262 917 A2

## Description

MIXERS

This invention is concerned with mixers for rubber or plastics material and is especially, but not exclusively, concerned with mixers suitable for use in mixing synthetic rubber.

Various mixers, both batch mixers and continuous mixers, have been proposed for mixing rubber or plastics materials. Many of the mixers heretofore used, for example "Banbury" mixers manufactured by the applicant company, have rapidly produced well mixed batches of materials. However, although the mixing achieved has been good, in a limited number of casesa very small,unmixed residue may remain, which can spoil the mixture. This residue of unmixed material is that which has missed the "intensive mixing portion" of the relevant mixing machine. Subsequent treatment can up-grade mixtures but breaking down of agglomerates is difficult and, in any event, further processing adds to the cost of producing the final end product.

To eliminate the dead spots, it is necessary to increase the bores of the mixing chamber whilst retaining the same rotor centres.

Mixers with this chamber shape are well known but the reason for the shape is to use rotors with different mixing principle but the shape of rotors is not as efficient as the "Banbury" mixer in the ingestion of materials into the mixing chamber.

According to the present invention, there is provided a mixer for plastics and rubber material comprising a housing, a pair of mixing rotors which gear together disposed in the housing, a rotor having a blade of left hand helical form and the other rotor having blade of right hand helical form, each blade starting from one end face of the relevant rotor, terminating short of the other end face of that rotor, a gap being defined between adjacent blades of the two rotors and means for driving the rotors at equal speeds whereby material fed to the rotors to be mixed is always directed by the rotors away from their end faces.

What was not apparent from existing mixer designs was that it is possible to arrange rotors similar to the existing "Banbury" mixer designs with right and left hand helix angles so material is pushed away from the rotor ends to reduce the pressure of the stock on the chamber end seals to run with intersecting loci of rotation.

The invention uses rotors with right hand (RH) and left hand (LH) helices which can "gear" together without the blades hitting each other due to the large clearance between the blades, and providing the right hand helix on one rotor "gears" with the left hand helix on the other rotor.

The use of right hand and left hand helixes has the advantage of pushing material away from the chamber ends.

Rotors which "gear together", that is work in chambers with increased bores so the rotors work with intersecting loci of rotation, normally are designed so that they mix between the rotors as well as by interaction between the chamber bores and the rotor. This leads to a problem in as much as the quantity of material passing down between the rotors must equal the amount being pushed up by the rotors around the chamber bores. As the amount which can go down between the rotors is restricted this results in the chamber being only partly filled and a low batch weight. European patent application 0-170-397 attempts to overcome this somewhat, but it is a feature of the existing intermeshing designs that the batch weight is low compared with the chamber volume. With the new design the rotors use the same type of profile as the existing "Banbury" mixer and the resultant big spaces between the rotors allows for a batch which for the same chamber sizes results in a 20% bigger batch weight.

In order that the invention may be more clearly understood, one embodiment of the invention will now be described, by way of example, with reference to the accompanying drawing in which:-

Figure 1 shows a sectional front elevational view of a mixer machine,

Figure 2 shows a side elevational view of a pair of mixing rotors for the machine of Figure 1,

Figure 3 shows a cross-sectional view of the rotors of Figure 2 along the line X-Y-Z of Figure 2,

Figure 4 is a developed view of the rotors of Figures 2 and 3.

Figures 5 and 6 show developed and cross sectional views of an alternative form of rotor to that shown in Figures 3 and 4, and

Figure 7 shows a mixer machine in side elevational view similar to the machine of Figure 1, but having the rotors of Figures 5 and 6.

Referring to the drawings, the mixer comprises a housing 10 in which is formed a mixing chamber 12 of generally figure "8" shaped cross-section comprising two interesecting parallel, cylindrical portions 14, 16. Two rotors 18, 20 are mounted for rotation about parallel axes A which lie in a horizontal plane; the rotor 18 is mounted in the cylindrical portion 14 with its axis of rotation coaxial with the axis of the portion 14 and the rotor 20 is mounted in the cylindrical portion 16 with its axis coaxial with the cylindrical portion 16.

The rotors are rotated in opposite directions (as indicated by the arrows B) at the same speed and in synchronism. The rotors are driven by drive means (not shown) of known construction, including a motor driving a gear box by which the rotors are driven, the gears intermeshing so that the rotors 18, 20 rotate in synchronism. The speed of rotation of the rotors can be varied in known way.

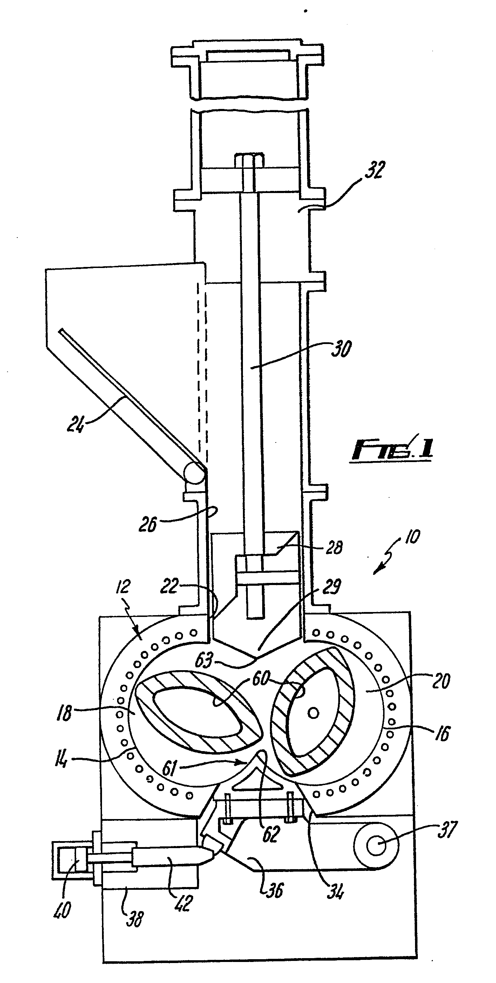

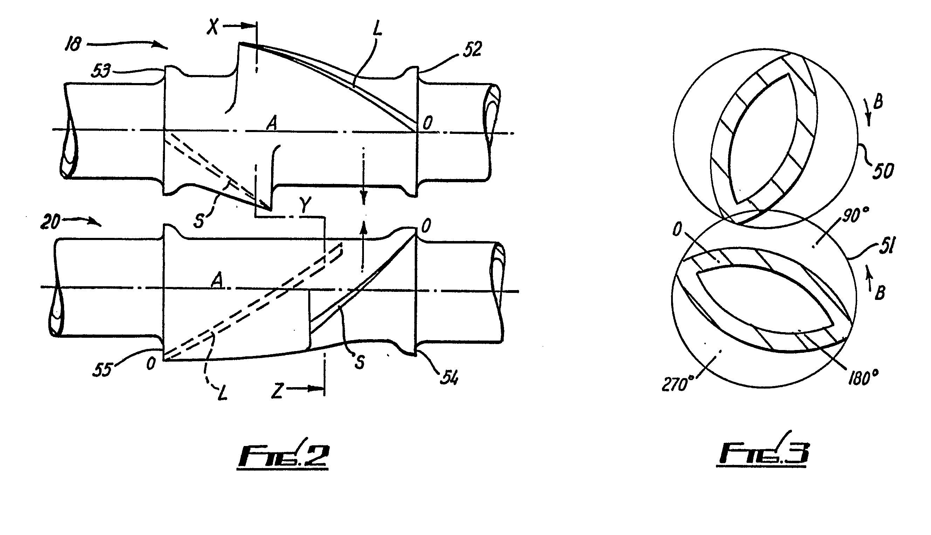

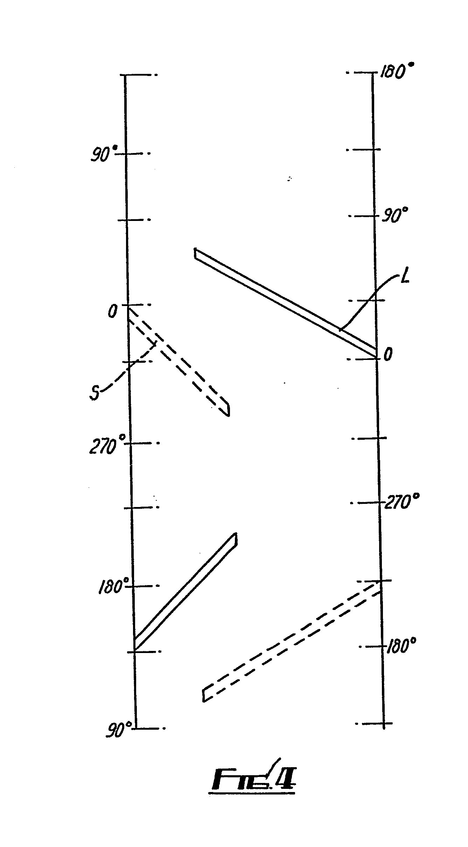

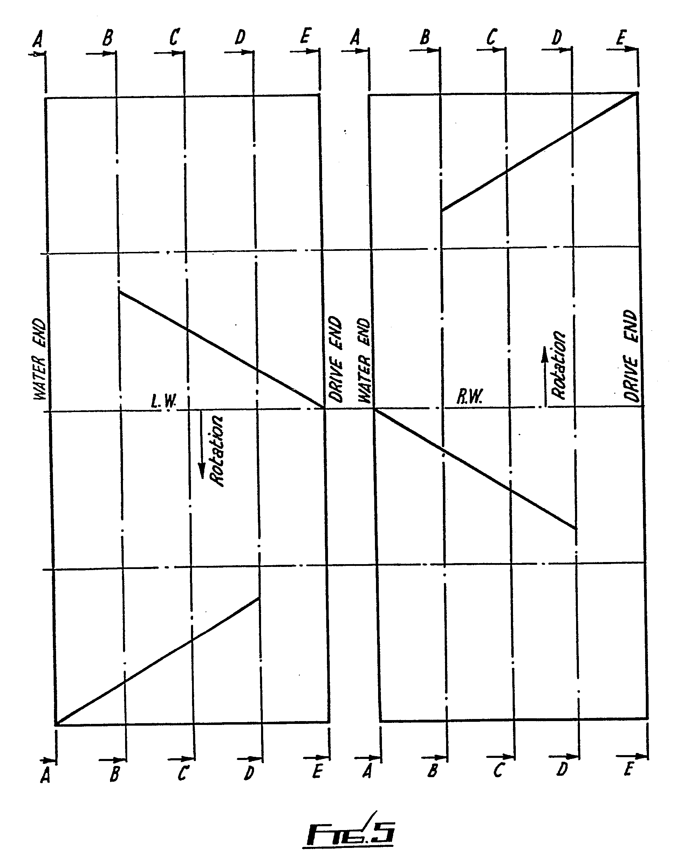

Each of the rotors 18, 20 is provided with passages 60 for heat exchange fluid to heat or cool the rotors 18, 20 and housing 10 in known manner. The nature and disposition of the rotors may be seen more particularly with reference to Figures 2,3 and 4. Each rotor 18, 20 has a short helical blade S and a long helical blade L. Each blade extends from one rotor end face, but stops short of the opposite end face. As the rotors rotate in synchronism, the blades gear with one another. The degree of overlap of the geared rotorts can be seen from Figure 3 in which the circular paths 50, 51 followed by the tips of the long blades of both rotors has been shown. Despite the overlap a considerable cavity is defined between the two rotors for a substantial part of their cycle thus facilitating the high batch weight previously mentioned. During rotation, the blades direct the material being mixed axially towards the centre of the rotors away from the end faces 52, 53, 54 and 55 thus relieving the pressure on the rotor end seals.

The mixer has an inlet opening 22 to the mixing chamber 12 extending along the whole length of the mixing chamber, the inlet opening 22 being formed in an upper part of the housing 10 centrally disposed between the two cylindrical portions 14, 16, of the mixing chamber. A feed assembly of the same general construction as commonly used in heretofore known mixers is arranged to feed material to be mixed through the inlet opening 22 into the chamber 12. The feed assembly comprises a hopper 24, a throat portion 26 of which leads to the inlet opening 22. A closure member, provided by a ram 28 (sometimes referred to in known internal mixers as a "weight") is arranged to close the inlet opening 22. The ram 28 is mounted at a lower end portion of a piston rod 30 of a piston and cylinder arrangement, the cylinder 32 of which is mounted on an upper portion of the hopper 24 above the inlet opening 22. The ram 28 slides in the opening 22 and throat portion 26 of the hopper 24 and prevents escape of material through the opening 22 during mixing, from the mixing chamber 12. The ram 28 may be raised to uppermost position by admission of pressurised fluid, namely air, to the cylinder; whilst held in this raised position, materials to be mixed may be introduced through the hopper 24 and inlet opening 22 into the mixing chamber 12. Some of the materials to be mixed may be in the form of fairly large pieces of rubber stock and may not merely fall into the mixing chamber but can be pushed into the mixing chamber by the ram 28 (or such other means as may be provided in mixers generally similar to the illustrative mixer). When the materials to be mixed have been introduced the ram is lowered by admission of air under a controlled pressure to the cylinder 32, the air pressure together with the weight of the ram 28 urging the ram 28 downwardly to push the materials to be mixed into the mixing chamber 12. When all of the material to be mixed has been drawn into the mixing chamber 12 the ram will have reached a lowermost position as shown in Figure 1. Depending on the configuration of the rotors, the materials to be mixed and other factors e.g. speed and temperature of rotors, it may be found that the rotor action draws material into the mixer with little or no assistance from the ram 28.

The mixer also comprises an outlet opening from the mixing chamber in a lower part of the housing 10 likewise centrally disposed between the two cylindrical portions 14, 16 of the mixing chamber 12. The illustrative mixer comprises a closure member namely a so-called drop door 36. The drop door 36 is of known construction generally as used in the mixer referred to above. The drop door 36 is mounted for pivotal movement about an axle 37 journalled in the housing 10. The outlet opening 34 extends substantially the whole length of the mixing chamber 12. The drop door is shown in figure 1 in a closed position in which it is in tight engagement with walls of the outlet opening, thereby sealing the outlet opening against escape of material from the mixing chamber 12. The drop door 36 is held in its closed position by locking means 38 comprising a cylinder 40 mounted on the housing 10 from which a piston rod 42 projects. The piston rod 42 is urged outwardly of the cylinder to engage a surface of the drop door 36 to urge the drop door 36 firmly into engagement with walls of the outlet opening 34 thus to seal the opening. When it is wished to open the drop door the piston rod 42 is withdrawn clear of the door. The door can then be pivotted about the axle 37 to move the door 36 completely clear of the outlet opening 34, by moving means (not shown). When it is desired to close the door the door is pivotted towards its closed condition by the same movement means.

As can be seen from figure 1 of the accompanying drawings, an upper portion of the door has a cusp-like configuration 61, the uppermost surfaces of the door providing continuations of the cylindrical surfaces of the cylindrical portions 14, 16 which meet at an edge 62 on a central plane of the mixing chamber. The lowermost surface of the ram 28 has a V-shaped configuration 29, cylindrical portions 14, 16, comprising surfaces meeting at an edge 63 lying in the central plane of the mixing chamber 12, similar to the edge on the door.

In the operation of the mixer, as hereinbefore mentioned, material is introduced, through the inlet opening 22 into the mixing chamber 12 with the ram 28 held in an uppermost position. The rotors are caused to rotate in the direction of the arrows B at suitable speeds, the direction of rotation of the rotors tending to drag the material introduced through the opening 22 through the gap between the rotors 18, 20 and into the mixing chamber. The drop door 36 is locked in its closed position (as shown in Figure 1) during mixing. Material to be mixed is urged into the mixing chamber, likewise, by pressure exerted by the ram 28 which, as material is forced into the mixing chamber by the ram 28 and drawn into the chamber by action of the rotors 18, 20 descends under the pressure applied by the cylinder 32 and its own weight, until it reaches its lowermost position in which it is shown in figure 1. The temperature of the housing 10 and rotors 18, 20 is controlled during mixing by the heat exchange fluid referred to previously. The speed of rotation of the rotors 18, 20 can be fixed or variable to give the material a desired mixing cycle. If necessary, additional material to be mixed may be introduced after a first part of a batch has been given an initial mixing. The illustrative mixer subjects the material to be mixed to a distributive action in the gap between the rotors 18, 20. Material to be mixed is also sheared and smeared over the surfaces of the cylindrical portions 14, 16 of the mixing chamber, thus being subjected to a dispersive mixing action, in a manner similar to that achieved by a Banbury mixer as referred to above. It can be seen that all of the internal surfaces of the mixing chamber and of the rotors contribute both to the mixing effort and to heat transfer (efficient heat transfer between the rotors 18, 20 and housing 10 on the one hand and the material to be mixed on the other hand, is important in order to ensure most efficient mixing without over-heating the material to be mixed which in most instances will lead to degrading of the material). The temperature and time of mixing (and, where possible speed of the rotors) are controlled to achieve a desired mixing cycle. It will be appreciated that the rotors 14, 16 ensure that the whole of the interior of the mixing chamber 12 is swept by the rotors 18, 20: no "dead spots" are present in the mixing chamber which militates against any material remaining in the chamber from one cycle of operation to the next which would lead to reduced quality of product.

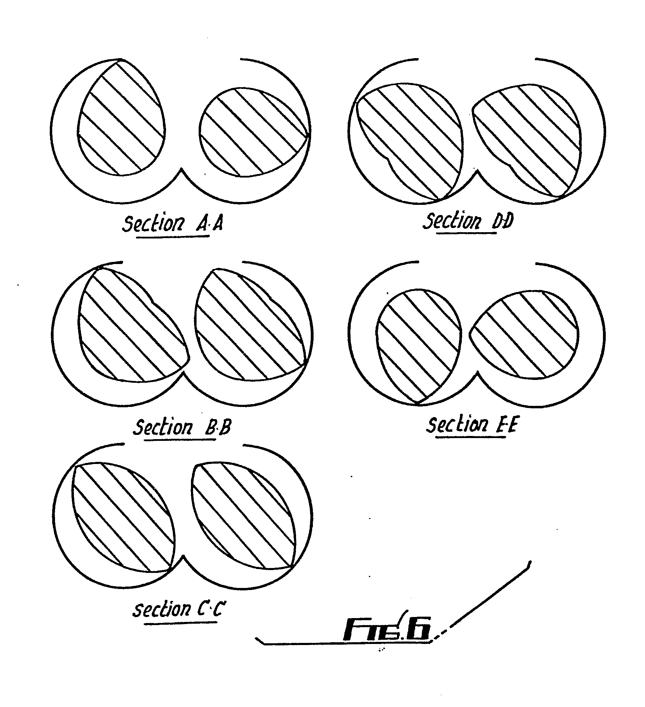

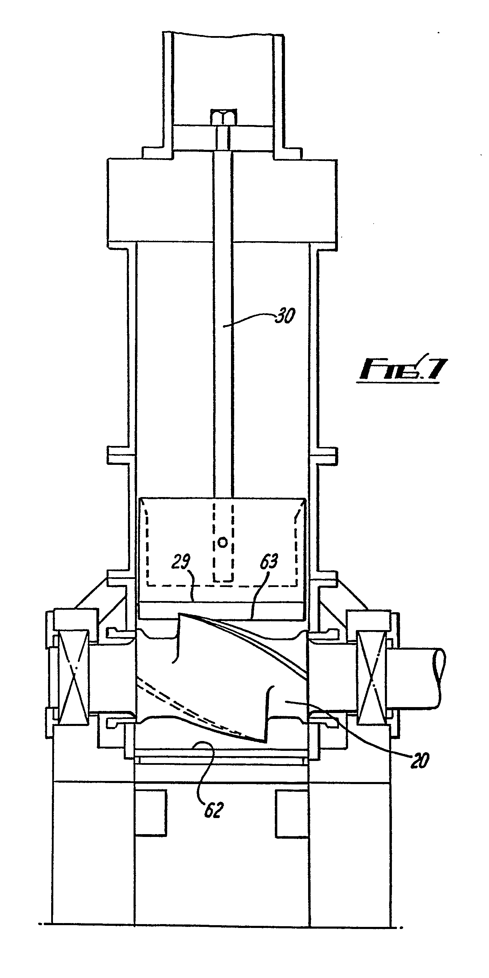

In the rotor described above, the blades are of unequal length on each rotor. This is similar to existing Banbury designs. Figures 5 and 6 show developed and cross-sectional views (taken along the lines of cross section A-A to G-G shown in Figure 5) of an alternative rotor in which the blades are of equal length on each rotor. The lengths of these blades is critical. Optimum performance being achieved when the gap between the end of the blade and the adjacent end of the rotor is 24% of the blade length. The mixer machine with the rotors of Figures 5 and 6 installed is shown in Figure 7 in side elevational view. The same references identify equivalent parts in both Figures 1 and 7.

The rotors of mixers in accordance with the invention are similar in shape to the Banbury mixer with smooth contours and no deadspots. The use of the Banbury type rotors in an overlapping configuration promotes good mixing firstly by sweeping the mixing chamber and secondly by having no re-entrant portions or cavities in which material can lodge.

Although the above described mixer is a batch mixer, as hereinbefore discussed the invention may equally be applied to continuous mixers and the construction of mixers embodying the invention may be varied using various known constructions provided that the mixing rotors have the configuration defined herein.

## Claims

1. A mixer for plastics and rubber material comprising a housing (10), a pair of mixing rotors (18,20) which gear together disposed in the housing, each rotor having a blade of left hand helical form (LH) and a blade of right hand helical form (RH), characterised by each blade starting from one end face (52, 53, 54, 55) of the relevant rotor, terminating short of the other end face of that rotor, a gap being defined between adjacent blades of the two rotors and means for driving the rotors at equal speeds whereby material fed to the rotors to be mixed is always directed by the rotors (18,20) away from their end faces (52, 53, 54, 55).

2. A mixer as claimed in claim 1, in which each rotor (18, 20) has four blades (L,S) arranged in two pairs with the blades (L,S) of each pair differing in length.

3. A mixer as claimed in claim 1 or 2, in which the housing (10) defines two portions (14,16) of part circular cross-section to accommodate respective rotors (18,20), the portions meeting with each other and defining points (62) at their meeting point so as to avoid spaces for the accumulation of unmixed material.

4. A mixer as claimed in claim 3, in which one of the points (62) is defined by an outlet door (36) of the mixer.

5. A mixer as claimed in any preceding claim in which the gap between each blade end and the adjacent end of the rotor is 24% of the blade length.

0262917

_FIG.1_

0262917

FIG.3

FIG.2

0262917

FIG.4

FIG.5

0262917

Section A·A

Section D·D

Section B·B

Section E·E

Section C·C

FIG.6

0262917

FIG.7